(19) Europäisches Patentamt
European Patent Office
Office européen des brevets

(11) **EP 2 605 057 A1**

(12) **EUROPEAN PATENT APPLICATION**

(43) Date of publication:
**19.06.2013 Bulletin 2013/25**

(51) Int Cl.:
***G02B 27/22*** (2006.01)       *G02B 26/08* (2006.01)

(21) Application number: **11193333.9**

(22) Date of filing: **13.12.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Grapac Japan Co., Inc.**
**Tokyo 131-0034 (JP)**

(72) Inventors:
- **Bao, Yue**
  **Setagaya-ku, Tokyo 158-8557 (JP)**
- **Oishi, Noriji**
  **Yokosuka-shi,**
  **Kanagawa, 237-0066 (JP)**

(74) Representative: **Beckord & Niedlich**
**Marktplatz 17**
**83607 Holzkirchen (DE)**

(54) **Image display device and image display method**

(57)     An image display device includes an aggregate of convex lenses arranged on a surface thereof with a predetermined lens pitch $P_x$ in at least one direction $D_x$ (in which $x$ is a suffix representing the direction); and a display unit displaying a plurality of element images on a focus surface of the convex lenses or near the focal plane surface in a manner aligned along the surface to thereby display the element images aligned in the direction $D_x$ with an image pitch $w_x$ different from the pitch $P_x$. By using the image display device, a moiré stripe formed by shift in pitches between a plurality of convex lenses and a plurality of element images is stereoscopically displayed as an image or displayed as an image of animation, and the element images are composed of an aggregation of a plurality of parallax or frame component images.

FIG.9

**Description**

BACKGROUND OF THE INVENTION

Field of the Invention

The present invention relates to an image display device and an image display method for displaying moiré stripe by using a two-dimensional lens array or lenticular lens in which a plurality of convex lenses are arranged in at least one direction.

Related Art

In a related art, there is known a phenomenon in which a moiré stripe formed by a lattice pattern arranged in parallel with a predetermined interval appears as stand-out pattern or get-dented pattern. Furthermore, there is also known a technology in which a periodic pattern is arranged below the twp-dimensional lens array or lenticular lens so as to provide and display the eye-catching moiré stripe having a get-dented appearance (for example, as disclosed in the following Patent Documents 1-7). There is also known a technology in which some variation is applied to a pattern to be displayed (for example, refer to the following Patent Document 8).

Furthermore, there is also known a technology for displaying a three-dimensional (3D) image by arranging, in matrix shape, an image composed by aggregate (aggregation) of parallax components images in a stereoscopic (3D) manner and viewing this image through a lens array (for example, refer to Patent Document 9).

The above mentioned Patent Documents are as follows.

Patent Document 1: Specification of U.S. Patent Application Laid-open No. 2007/0097111
Patent Document 2: Japanese Patent Application Laid-open Publication No. HEI 11-189000
Patent Document 3: Japanese Patent Application Laid-open Publication No. 2001-55000
Patent Document 4: Japanese Patent Application Laid-open Publication No. 2001-180198
Patent Document 5: Japanese Patent Application Laid-open Publication No. 2002-46400
Patent Document 6: Japanese Patent Application Laid-open Publication No. 2002-120500
Patent Document 7: Japanese Patent Application Laid-open Publication No. 2003-220173
Patent Document 8: Japanese Patent Application Laid-open Publication No. 2003-226099
Patent Document 9: Japanese Patent Application Laid-open Publication No. 2008-249809

However, the technologies utilizing the moiré stripe mentioned above are only ones which display geometric pattern or simple pattern of repeated image as moiré stripe, and the stereoscopic (3D) display by using parallax component images has not been made. Moreover, there is no technology of functioning as moving images or animation by frame-display of the moiré stripe.

In the technology of the Patent Document 9, an image is viewed through a plurality of lenses corresponding to images including the parallax component images, which however provides a problem of narrow visible area or range on which the 3D image is displayed. Particularly, in the technology of displaying an image three-dimensionally by using an image including the parallax component image, in a case when a moiré stripe appears, it has been required to remove such moiré stripe, which constitutes an obstacle for positively utilizing the moiré stripe.

SUMMARY OF THE INVENTION

The present invention was accordingly conceived in consideration of the circumstances mentioned above and an object thereof is to provide an image display device and an image display method capable of stereoscopically (3D) displaying image or displaying image as animation (moving image) even in a wide-angle view by producing the moiré stripe using the parallax component images or frame component images.

The above and other object can be achieved according to the present invention by providing, in one aspect, an image display device comprising: an aggregate of convex lenses arranged on a surface thereof with a predetermined lens pitch $P_x$ in at least one direction $D_x$ (in which $_x$ is a suffix representing the direction); and a display unit displaying a plurality of element images on a focal plane surface of the convex lenses or near the focal plane surface in a manner aligned along the surface to thereby display the element images aligned in the direction $D_x$ with an image pitch $W_x$ different from the pitch $P_x$, wherein a moiré stripe formed by shift in pitches between a plurality of convex lenses and a plurality of element images is stereoscopically displayed as an image, and the element images are composed of an aggregation of a plurality of parallax component images.

According to this arrangement, the moiré stripe is produced from the element images including the parallax component images, thus displaying a stereoscopic (i.e., 3D) image in a wide range.

In another aspect of the present invention, there is also provided an image display device comprising: an aggregate of convex lenses arranged on a surface thereof with a predetermined lens pitch $P_x$ in at least one direction $D_x$ (in which $_x$ is a suffix representing the direction); and a display unit displaying a plurality of element images on a focal plane surface of the convex lenses or near the focal plane surface in a manner aligned along the surface to thereby display the element images aligned in the direction $D_x$ with an image pitch $W_x$ different from the pitch $P_x$, wherein a moiré stripe formed by shift in pitches between a plurality of convex lenses and a plurality of element images is stereoscopically displayed as an image, and the element images are composed of an aggregation of a plurality of frame component images.

According to this arrangement, the moiré stripe is produced from the element images including the frame component images, thus displaying an animation in a wide range.

Further, in the above aspects, it may be desired that an original image as an object to be displayed is composed of a plurality of segmented images having parallaxes or frames which are different from each other, and the different element images include the segmented images.

According to this example, the different segmented images included in the different element images can be observed through different convex lenses, thus obtaining further stereoscopic feeling or moving images as animation.

In a preferred example in the above aspects, the aggregation of the element images constitutes a periodic image periodically in at least one direction $D_x$, and the periodic image is formed by the steps of: segmenting or extracting a plurality of line images or point images with interval $k_{0x}$ from a plurality of segmented images being an original image as an object to be displayed having different parallaxes or frames and having image pitch $w_{0x}$ in at least one direction $D_x$; reducing or thinning out the interval k of the line images or point images to an interval $k_x$, (wherein $k_x = k_{0x} \times (w_x/w_{0x})$) in a case of $w_x \neq w_{0x}$; and aligning the line images or point images belonging to the same segmented image in an order of segmentation of the line images or point images with the interval $P_x$, and aligning the element images in the direction $D_x$ with the element image pitch $W_x$ so as to contact adjacently in an order reverse to the segmented order of the line images or point images belonging to adjacent segmented images.

In this example, the interval $k_x = |P_x - w_x|$ may be desired.

Accordingly, the positions of the line images and the point images are easily obtainable, so that the periodic image can be easily produced.

It may be also desired that the image display device further includes a moving unit for changing relative position between the aggregate of the convex lenses and the element images along the direction $D_x$ to thereby change an image to display in an enlarged manner.

According to this structure, the stereoscopic (i.e., 3D) image or animation image can be viewed without changing the viewing points.

The element images may be formed by using the segmented images obtained by photographing or rendering a three-dimensional object as the original image while rotating sequentially the three-dimensional object around a predetermined axis with a predetermined angular pitch.

According to this arrangement, a plurality of segmented images having different parallaxes or frames can be easily produced as an original image as an object to be displayed.

Furthermore, the above object can be achieved according to the present invention by providing, in a further aspect, an image display method of displaying an image stereoscopically by using an image display device including an aggregate of convex lenses arranged on a surface thereof with a predetermined lens pitch $P_x$ in at least one direction $D_x$ (in which $_x$ is a suffix representing the direction); and a display unit displaying a plurality of element images on a focal plane surface of the convex lenses or near the focal plane surface in a manner aligned along the surface to thereby display the element images aligned in the direction $D_x$ with an image pitch $W_x$ different from the pitch $P_x$, wherein the element images are composed of an aggregation of a plurality of parallax component images, and a moiré stripe formed by shift in pitches between a plurality of convex lenses and a plurality of element images is stereoscopically displayed as an image.

In a still further aspect of the present invention, there is also provided an image display method of displaying an image as animation by using an image display device including an aggregate of convex lenses arranged on a surface thereof with a predetermined lens pitch $P_x$ in at least one direction $D_x$ (in which $_x$ is a suffix representing the direction); and a display unit displaying a plurality of element images on a focal plane surface of the convex lenses or near the focal plane surface in a manner aligned along the surface to thereby display the element images aligned in the direction $D_x$ with an image pitch $W_x$ different from the pitch $P_x$, wherein the element images are composed of an aggregation of a plurality of frame component images, and a moiré stripe formed by shift in pitches between a plurality of convex lenses and a plurality of element images is displayed as an image of animation.

As mentioned above, according to the present invention of the characteristic features or arrangement, the moiré stripe can be produced by using the parallax component images or frame component images by utilizing moiré interference which was not displayed in a simply repeated patterns in a prior art, thereby making it possible to display the stereoscopic (3D) display or animation display image according to the present invention.

The nature and further characteristic features of the present invention can be made clearer from the following descriptions made with reference to the accompanying drawings.

BRIEF DESCRIPTION OF THE DRAWINGS

In the accompanying drawings:

Fig. 1 including Figs. 1A and 1B shows a principle that the moiré stripe has a depth;

Fig. 2 is a perspective view showing outer appearance of an image display device according to a first embodiment of the present invention using a lenticular lens;

Fig. 3 is a view showing a principle for displaying an image in an enlarged three-dimensional (stereoscopic) scale for the image display device according to the first embodiment;

Fig. 4 is a view explaining a method of forming an element image in the image display device according to the first embodiment;

Fig. 5 is a view continuous to Fig. 4 for explaining the image display method;

Fig. 6 is a view explaining a method of forming an element image in an image display device according to a second embodiment;

Fig. 7 is an illustration explaining a method of obtaining a segmented image by photographing a three-dimensional object as original image;

Fig. 8 is a view showing one example of a periodic image produced from the image obtained by the method represented by Fig. 7;

Fig. 9 is a view showing an image display device according to a third embodiment of the present invention;

Fig. 10 is a view explaining a method of forming an element image in an image display device according to a fourth embodiment;

Fig. 11 is a perspective view showing outer appearance of an image display device according to a fifth embodiment of the present invention using a two-dimensional lens array;

Fig. 12 is a view explaining a method of forming an element image in the image display device according to the fifth embodiment;

Fig. 13 is an illustration explaining a method of obtaining a segmented image by photographing a three-dimensional object as an original image according to the fifth embodiment;

Fig. 14 is a view showing an image display device according to a sixth embodiment of the present invention;

Fig. 15 is a view showing a two-dimensional lens array in which a plurality of convex lenses, each having a hexagonal shape, are arranged;

Fig. 16 is an illustration of an arrangement of the image display device according to one example of the present invention; and

Fig. 17 is a view illustrating an arranged state of the element images.

DESCRIPTION OF THE PREFERRED EMBODIMENTS

Hereunder, preferred embodiments of the present invention will be described with reference to the accompanying drawings.

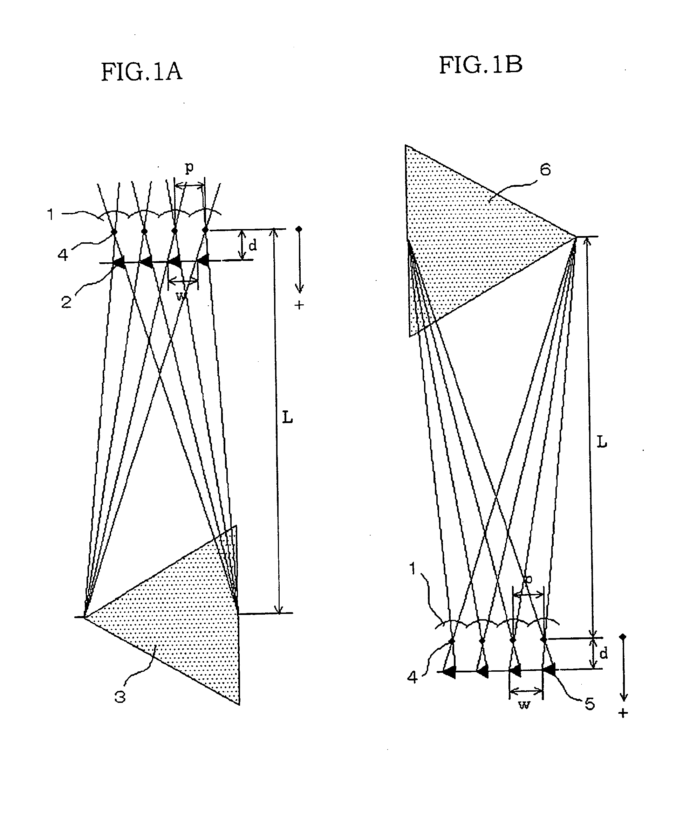

First, with reference to Fig. 1 (Figs. 1A and 1B), there will be explained a principle in which a moiré stripe formed by a lens array (convex lens aggregate) such as lenticular lens or two-dimensional lens array and a periodic pattern appears with a sense of depth (get-dented depth).

As shown in Fig. 1A, in a case where a periodic pattern 2 is placed a focal plane surface or near of a lens array 1 and the periodic pattern 2 has a pitch "w" is smaller than a pitch "p" of the lens array, images 3 of unit patterns of the respective lenses of the leans array 1 are overlapped to each other in a back portion by a distance L from curvature center 4 of the lens, and to this position, an enlarged image are formed and observed. The distance L will be given from the following equation (1) from a distance "d" between the curvature center 4 and the periodical pattern 2, and an enlarged magnification ratio "A" of the image will be also given by the following equation (2).

[Equation (1)]

$$L = \frac{p\,d}{p-w} \qquad \text{------------ - (1)}$$

[Equation (2)]

$$A = \frac{p}{p-w} \qquad \text{------------ (2)}$$

On the other hand, as shown in Fig. 1B, in a case where a periodic pattern 5 is placed a focal plane surface or near of a lens array 1 and the periodical pattern 5 has a pitch "w" is larger than a pitch "p" of the lens array, images 6 of unit patterns of the respective lenses of the leans array 1 are overlapped to each other in a front portion by a distance L (depth) from curvature center 4 of the lens, and to this position, an inverted enlarged image are formed and observed. Supposing that the distance L is considered as a singed value and the front side is considered to be negative, the above-mentioned equation (1) is also established, and if an enlarged magnification ratio "A" of the inverted image is given by a negative value, the above-mentioned equation (2) will be also established.

Meanwhile, in a conventional display device, the periodic patterns 2 and 5 are used as those of arrangement of the same diagram or those which gradually change in their shapes in accordance with positions.

In the case that the periodic patterns are used as those of arrangement of the same diagram, images that can be visually seen will become simply repeated pattern, and accordingly, since this repeated pattern is the enlarged image of the periodic pattern, a result is easily predicable, and there are many examples realized as actually commercial products.

On the other hand, in the case where a periodic pattern, that varies when viewed from different positions or at different angles, is used, the visual effect may be strong, but relationship between a periodic pattern and a visual displayed pattern is complicated, and hence, it is difficult to make such design. In addition, the change in pattern was limited to a simple one such as rotation.

On the contrary, according to the embodiment of the present invention, it becomes possible to display a three-dimensional image or animation in a wide area or range by producing or forming the moiré stripe using an image including parallax component images or frame (animation) component images.

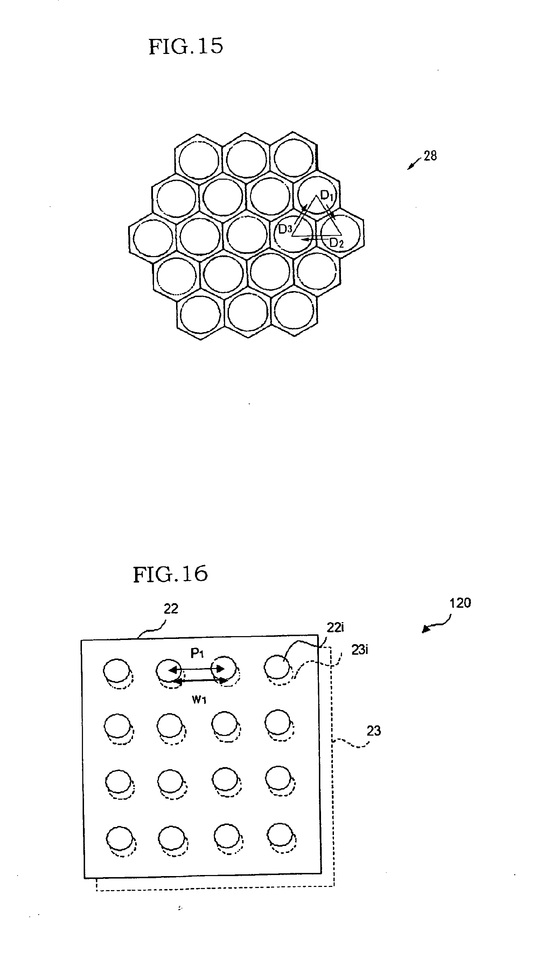

Fig. 16 represents a configuration or arrangement of an image display device 120 according to one embodiment of the present invention (i.e., fifth embodiment of the present invention which will be mentioned hereinafter).

With reference to Fig. 16, the image display device 120 is provided with a two-dimensional lens array (corresponding to a convex lens aggregate in an appended patent claim) 22 and a display unit 23. The two-dimensional lens array 22 includes a plurality of convex lenses 22i arranged in transverse and vertical rows in shape of matrix. The display unit 23 includes element images 23i also arranged in transverse and vertical rows in shape of matrix. Each of the convex lenses 22i is arranged to a position corresponding to the arrangement of each of the element images 23i. For example, with reference to Fig. 16, the respective convex lenses 22i are arranged at a pitch $P_1$ in the lateral direction, and on the other hand, the respective element images 23i are arranged at a pitch w1, in which $P_1 \neq w1$, and the arrangement pattern of the element images 23i (4 x 4 stereo lattice in Fig. 16) is arranged in a similarity shape to the arrangement pattern of the convex lenses 22i (4 x 4 stereo lattice in Fig. 16), thereby forming the moiré stripe. It is further to be noted that in the case that the arrangement patterns of the lenses and the element images are similar to each other in shape, it is not necessary that the patterns of the respective lenses and element images resemble to each other, and for example, in the arrangement of Fig. 16, even if the convex lens 22i has a circular shape, the element image 23i may take rectangular shape.

The aggregate of the respective element images 23i constitutes a periodic image 23, which constitutes one sheet of large image arranged under the two-dimensional lens array 22, and the moiré pattern is caused by periodicity (pitch w1) of the periodic image 23. Further, the display unit is a portion displaying the periodic image 23, which may be a panel or like on which the periodic image is printed or may be a liquid crystal display device displaying the periodic image. Hereunder, the display unit and the periodic image may be designated by the same reference numeral such as "23" without being distinguished.

Furthermore, each of the element images 23i is composed of an aggregate of a plurality parallax component images. Because of this arrangement, the aggregate (periodic image) of the element images 23i constitutes the moiré pattern, which is then three-dimensionally (stereoscopically) displayed by the parallax component image.

That is, the element images 23i as aggregate of the parallax component images pass the convex lenses 22i, respectively, and then, the different parallax components are shot in the different directions. At this time, since parallax disparity component images are sent to both eyes of a viewer (i.e., observer), the three-dimensional image is recognized by the recognition of such disparity component image. Further, at least two or more disparity component images are included in the element image 23i.

The element image 23i may be composed of a plurality of plural frame (animation or moving images) component images. In this case, the aggregate of the element images 23i constitutes the moiré pattern, which is then displayed as animation by the frame component images.

That is, the element images 23i as aggregate of the frame component images pass the convex lenses 22i, respectively, and then, the different frame components are shot in the different directions. At this time, when the viewer moves, since different frame component images are sent to the eyes of the viewer, the animation is recognized by the recognition of such frame component image.

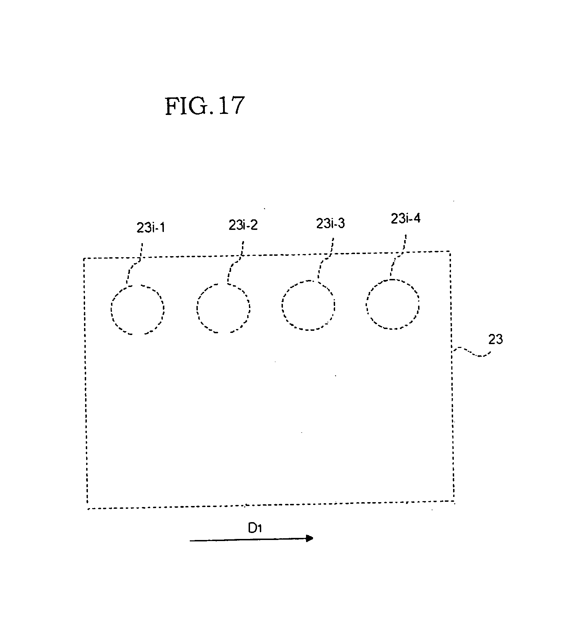

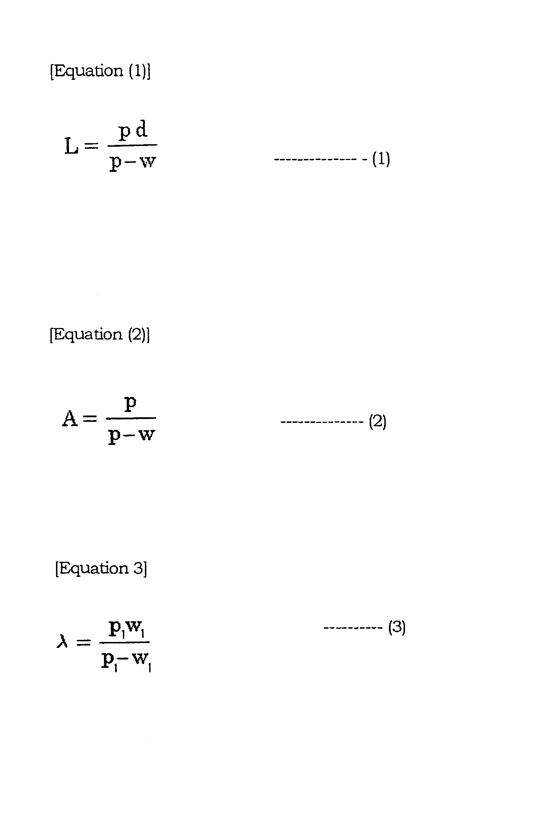

Further, as shown in Fig. 17, as viewed in one periodic direction ($D_1$ in Fig. 17), adjacent element images 23i-1 to 23i-4 include information of images viewed by slightly changing view points of an original image as an object to be displayed, and as the view point changes as will be described hereinafter, the element image is observed as an image which changes motion thereof. In the case of the animation display, the element images 23i-1 to 23i-4 includes motion information in which the original image as an object to be displayed, and as the view point changes as will be described hereinafter, the image is observed as an image which changes motion thereof.

Next, there will be explained an example for preparing an element image and a periodic image from an optional original image for enabling a displayed image to provide with a desired function or meaning, or to enhance display effect.

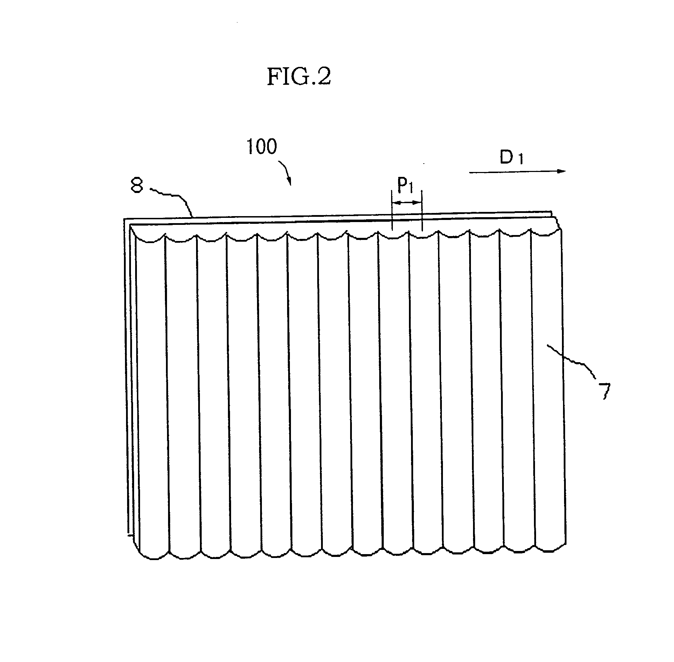

Fig. 2 is a perspective view showing an outer appearance of an image display device 100 according to a first embodiment of the present invention. The image display device 100 includes a lenticular lens 7 and a display unit, in which the lenticular lens 7 (corresponding to a convex lens aggregate recited in appended claims) composed of a plurality of convex lenses arranged in a horizontal direction $D_1$ with a pitch $P_1$, and in the display unit, periodic image 8 is arranged.

The image display device 100 includes only convex lenses arranged only in the horizontal direction $D_1$ which corresponds to a case of suffix (x = 1) of "D" in the appended claims, and as direction increases, (for example, horizontal direction and vertical (perpendicular) direction), the suffix "X' is expressed as x = 1, 2, --- to distinguish the directions.

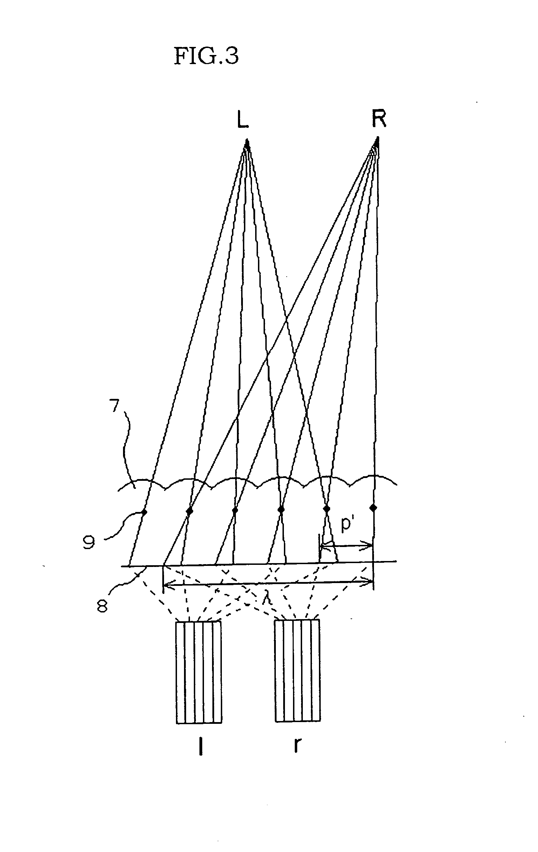

With the image display device 100, even in a case of Figs. 1A and 1B (that is, an image exists in rear or front direction side of the lenticular lens), an image viewed from a specific view point, as shown in Fig. 3, is an aggregate of line images (described hereinafter) included in the periodic image 8 viewed over the respective convex lenses. In other words, in a case where the display images appearing on the respective view points are resolved (decomposed) into line images, which are then arranged side by side at constant interval, these line images are focused on one view point from the respectively different convex lenses and then displayed as original image. More specifically, display images 1 and r appearing on the view points L and R are resolved into the line images parallel with the lenticular lens 7, and then, arranged respectively separately at a pitch p' (i.e., a width of the line images appearing from adjacent lenses at this view point, as described hereinafter), and according to this manner, an image pitch $w_1$ of the periodic image 8 which is aggregate of the line images is a width of the moiré stripe. Here, if the distance to the view point is sufficiently large in comparison with the thickness of the image display device 100, the pitch p' may be considered as p' = $P_1$, and the width $\lambda$ of the image (moiré stripe) will be expressed as the following equation (3).

[Equation 3]

$$\lambda = \frac{p_1 w_1}{p_1 - w_1}$$                    ---------- (3)

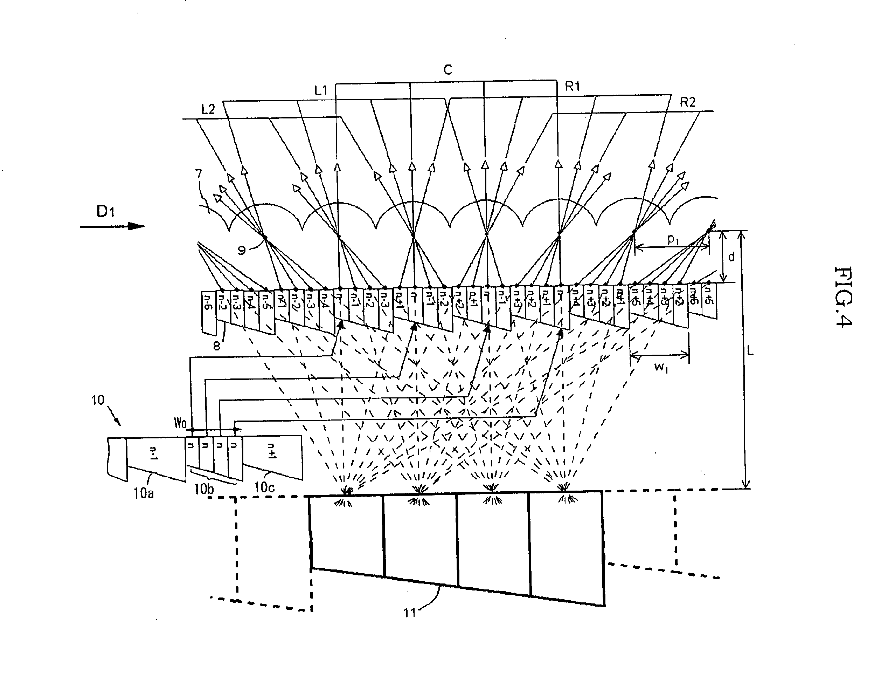

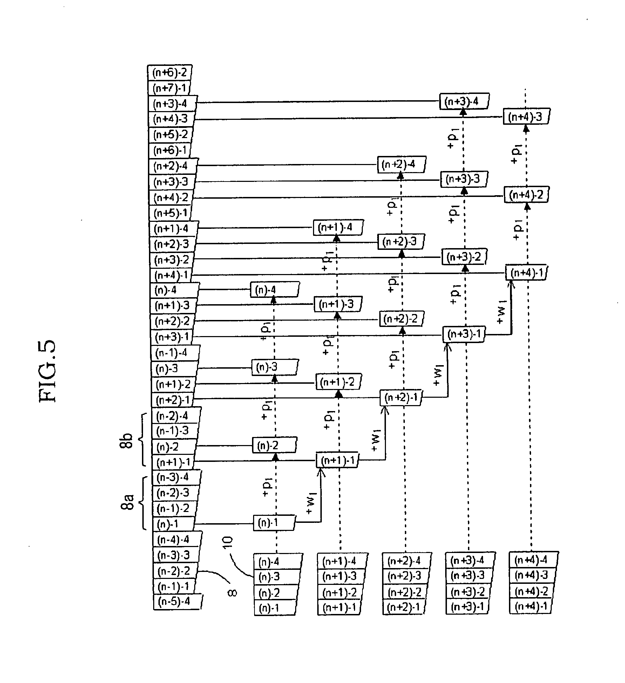

Next, with reference to Figs. 4 and 5, one example of a method of forming the periodic image 8 will be explained in detail. Further, in the above-described embodiment, it is supposed that the pitch $P_1 \geq w_1$, $|P_1 - w_1| = k_1$ (k is an interval between the line images on the periodic image 8), and the $w_1$ is integer multiple of $k_1$. In addition, it is also supposed that an image pitch (later mentioned) is $w_0 = w_1$, $P_1 = 5$, $w_1 = 4_1$, and $k_1 = 1$. For example, when a lenticular lens of 40LP1 is used, $P_1 = 25.4mm/40 = 0.635mm$, and $k_1 = 0.635mm/5 = 0.127mm$.

It is further to be noted that in a case of $k_x = |P_x - w_x|$, the positions of the line image and the point image, described hereinafter, are easily determined, so that the periodic image can be easily formed, thus being advantageous.

With reference to Fig. 4, the original images (parallax image or frame image) as an object to be displayed as an enlarged stereoscopic display are arranged, which constitute images having different parallax or frame. For example, this image is an image connecting, from the horizontal direction (in a case of two-original lens, horizontal and vertical directions), the images, each having a width w0, photographed with different parallax or frame. In an actual procedure, when a plurality of images each having a width w0 which are photographed at different angles, respectively, are connected, the line image and the point image can be effectively taken out, and hence, it becomes unnecessary to previously open or close many images. Particularly, in the case of the two-dimensional lens, a net-shaped point can be obtained at once through one processing and arranged.

The thus arranged original image 10 is segmented (i.e., divided) into a plurality of segmented images 10a to 10c along the direction $D_1$ with a pitch $w_0$. Here, by using a plurality of the segmented images 10a to 10c viewed as the original image from respectively different viewpoints, the original image 10 includes parallax image and the element image (partial image of the periodic image) from this original image 10. Hence, the element image includes the parallax image. On the other hand, in the case of the animation (moving image), it may be possible to prepare a plurality of images (segmented images) viewed, as the original image 10, from respectively different viewpoints in the like manner, or to prepare a plurality of time-varying images (segmented images).

Furthermore, the segmented images 10a to 10c are aligned from the left side in the direction $D_1$. In addition, as like as the segmented images of the original image, the periodic image may be directly produced by using a plurality of parallax images or frame imaged with the width $w_0$. In such case, the segmented processing or treatment will be not required not.

However, in the present invention, regardless of the fact whether the segmented processing is performed or not, the original image different respectively in the parallax or frame will be called "segmented image".

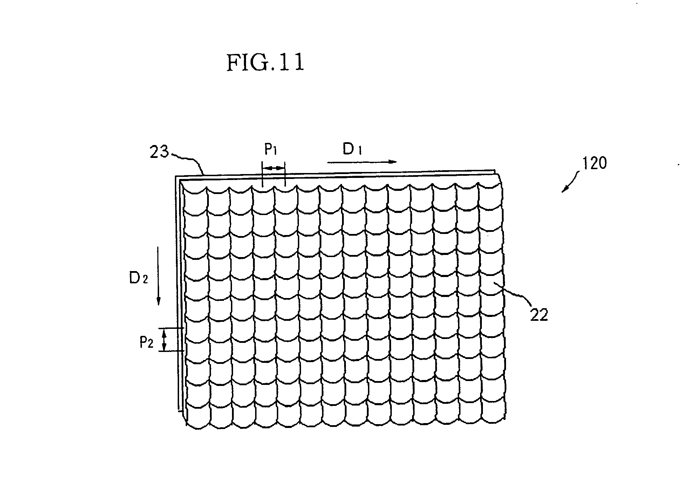

Further, in the case where the aggregate of the convex lenses is a lenticular lens as shown in Fig. 2, the segmented images 10a to 10c are rectangular images, in the case of the square lens array as shown in Fig. 11, a stereoscopic image is formed, and in the case of the honey-comb lens shown in Fig. 15, a hexagonal image is formed.

Next, for example, supposing that the segmented image 10b is segmented into a plurality of line images n with an interval $k_1$ in the direction $D_1$, and the line images n belonging to the segmented image 10b are aligned directly below the lens with an interval $P_1$. Herein, the line images n represent line image which are obtained by further segmenting the segmented image 10b which was obtained by segmenting an original image in the nth order from the left side along the direction $D_1$.

It is further to be noted that the convex lens aggregate is the lenticular lens shown in Fig. 2, the line image mentioned above is formed, but in the case of the two-dimensional lens array (square lens array shown in Fig. 11, honeycomb lens shown in Fig. 15, etc), a point image is formed.

Likely, the segmented image 10a is segmented into a plurality of line images (n - 1) with an interval $k_1$, the segmented image 10c is segmented into a plurality of line images (n + 1) with an interval $k_1$, and these line images are aligned in the direction $D_1$ at an interval $P_1$. Herein, the line images (n - 1), n, (n + 1) are adjacently arranged in an order reverse to the segmented order of the segmented images 10a to 10c (that is, (n + 1), n, (n - 1) from the left side along the direction $D_1$).

As described above, the line image (n + 1) is arranged on the left side of the line image n, and the line image (n - 1) is arranged on the right side of the line image n. Then, if the respective line images are aligned along the direction $D_1$ till the time when the image pitch becomes $w_1$, a plurality of line images included in the image pitch $w_1$ constitutes one element image, and the aggregation of a plurality of the element images constitutes the periodic image 8.

With the above description, the respective line images (n - 1), n, and (n + 1) are parallax component images respectively different in their parallaxes. For example, with reference to Fig. 4, when an image L1 is viewed with a right eye and an image c is viewed with a left eye of a viewer (observer), the line images (n - 1) and n which are different in their parallaxes are observed as a stereoscopic image (i.e., 3D image).

Meanwhile, in the case of the moving image (animation), the respective line images (n - 1), n, and (n + 1) are frame component images respectively different in their motion. For example, with reference to Fig. 4, when the view point moves from the image (n - 1) to the image n, the line images (n - 1) and n which are respectively different in their motions are observed, and hence, the moving image can be visually observed.

Now, with reference to Fig. 5, each of the line images n are aligned along the direction $D_1$ at an interval $P_1$ according to the segmented order of the line images. That is, as described hereinafter, when the respective line images n (n = 4) are viewed through the convex lens, the element image which is aggregation of these line images n is displayed as the segmented image 10b, and accordingly, if the line images are not aligned without maintaining the segmented order, the segmented images will be reversely displayed in the horizontal direction. Further, in Fig. 5, (n)-4 indicates the fourth image among the four (4) line images n from the left side in the direction $D_1$.

While shifting rightward the line image (n + 1) by the pitch $w_1$ from the line image n, the line images are likely aligned at the pitch $P_1$, respectively in the direction $D_1$. Thereafter, the respective line images are likely aligned in a manner such that the line images are adjacently aligned in an order reverse to the segmented order of the segmented images, and the aligned image having the image pitch $w_1$ is made as one element image (which may be called "partial periodic image". For example, in the example of Fig. 5, a part at which four line images n ~ (n - 3) are aggregated adjacently in a reverse order is made as a partial periodic image 8a, and a part at which four line images (n + 1) ~ (n - 2) are aggregated adjacently in a reverse order is made as a partial periodic image 8b.

In the manner mentioned above, the periodic image 8 (partial periodic images 8a, 8b, ----) are formed, and when the periodic image 8 is viewed through the lenticular lens, the respective segmented images are displayed according to the segmented order of the original image 10.

As shown in Figs. 4 and 5, the adjacent segmented images are displayed as continuously varying. That is, since the adjacent segmented images have high degree of similarity, by viewing these segmented images in order, the displayed image does not largely balanced in shape and becomes an image having slight strain. Accordingly, as shown in Fig. 1A, the enlarged image 11 is viewed with a (gent-dented) depth L.

More specifically, with reference to Fig. 4, the segmented image 10b as an aggregation of the nth line images (four) from the front surface C. Furthermore, the segmented images (n - 1)th and (n - 2)th from left side angled portions L1 and L2 along with the direction $D_1$ are viewed, and the segmented images (n + 1)th and (n + 2)th from right side angled portions R1 and R2 along with the direction $D_1$ are viewed. In other words, when the line of sight from the left side to the right side in the direction $D_1$ is moved, appearing images vary in accordance with the segmented order of the original image. Thus, as mentioned above, an optional image can be used as an original image to be displayed without damaging nature of the moiré stripe having the depth.

For example, in the case where an object image to be displayed in an enlarged manner is a parallax image, an enlarged image of the object image is viewed with a depth from a lens surface, and in addition, is observed as stereoscopic image with different parallaxes in accordance with viewing positions. On the other hand, in a case where an object image to be displayed in an enlarged manner is a frame of the animation (moving image), an enlarged image of the object image is viewed with a depth from a lens surface, and in addition, is observed as animation varying in accordance with viewing positions.

Further, it may be possible to prepare a plurality of segmented images 10a to 10c having different parallaxes or frames as an original image as an object to be displayed (these segmented images may be ones obtained by segmenting one original image or may be directly formed as mentioned hereinbefore). It may be also made that the different element images (partial periodic images) 8a and 8b include different segmented images (for example, the element image 8a includes the (n - 3)th line image belonging to a specific segmented image, but the element image 8b does not include the (n - 3)th line image but includes the (n + 1)th line image belonging to another segmented image).

Moreover, in a direction along the direction $D_1$, the original image is cut out with the depth $w_0$, and then, after reducing or thinning out it with the width $w_1$, is widened into ($w_1 \times P_1$). On the other hand, the height Ho of the original image is not processed in the direction perpendicular to the direction $D_1$. Accordingly, in order to make similar the ratio between the width and the height of an image to be display, it is necessary to produce $(w_1 \times P_1)/w_0 = H_1/H_0$. That is, the height of the original image is subjected to enlarging or reducing processing so as to provide $H_1 = (w_1 \times P_1) \times Ho/wo$.

Incidentally, with the case of Fig. 4, the line image n exists four ($w_1$/k), which are displayed respectively through four convex lenses. As the number of the line image n increases, the number of the convex lens also increase and an image to be displayed is widened. It is further preferred that the number of the line image n is plural.

Furthermore, in the embodiment mentioned above, the original image is segmented into the segmented images and the segmented image is segmented into the line images. However, for example, the line images may be directly extracted from the original image. In addition, a digital image may be adopted as an image to be processed. In such case, when segmentation or extraction is performed, if a pixel of a necessary line image with an image pitch $w_0$ does not exist, a line image mage be obtained by interpolation such as linear interpolation or nearest interpolation from surrounding pixels.

Hereunder, a method of producing a periodic image 8x by an image display device according to a second embodiment of the present invention will be described in detail. It is further to be noted that the image display device according to the second embodiment has substantially the same structure as that of the first embodiment except the difference of the periodic image 8x, and in the second embodiment, the pitch $P_1 < w_1$, and $|P_1 - w_1| = k_1$ ($w_1$ is multiple of $k_1$. Further, in the case of $P_1 = 5$, $w_1 = 4$, $w_1 = 6$, and $k_1 = 1$, for example, when a lenticular lens of 4OLP1 is used, $P_1 = 25.4mm/40 = 0.635mm$, and $k_1 = 0.635mm/5 = 0.127mm$.

Because of $P_1 < w_1$, as shown in Fig. 1B, in the structure of the second embodiment, the enlarged image is viewed as fly-out image.

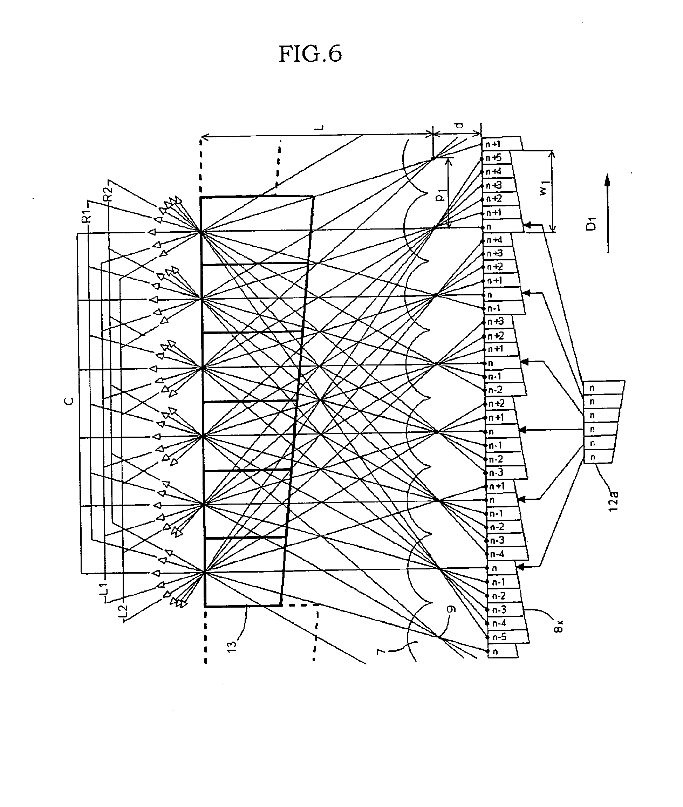

In an arrangement of Fig. 6, a original image as an object to be displayed in an enlarged manner is segmented into a plurality of segmented images in the direction $D_1$ with an image pitch $w_0$ (in Fig. 6, only one segmented image 12a is shown). Next, for example, the segmented image 10b is further segmented into a plurality of line images n in the direction $D_1$ with the interval $k_1$, and then, the line images n belonging to the segmented image 12a are aligned in the direction $D_1$ with a pitch $P_1$. Likely, the other segmented images are segmented each into a plurality of line images, which are then aligned in the direction $D_1$ with the pitch $P_1$. Herein, the line images (n - 1), n, (n + 1) belonging to the respective segmented images are adjacently arranged in the segmented order of the segmented images (that is, along the direction $D_1$, n and (n + 1) from the left side).

As mentioned above, the line image (n - 1) is arranged on the left side of the line image n, and the line image (n + 1) is arranged on the right side of the line image n. Then, when the line images are likely arranged along the direction $D_1$ to the tile till the image pitch becomes $w_1$, the plural line images included in the image pitch $w_1$ constitutes one element image, and when the plural element images are aggregated, a periodic image 8x is produced. That is, in the periodic image, the line images are aligned in the order of the segmented images, and because the periodic image is inverted laterally with respect to the original image, in the case where the object image displayed in the enlarged manner arranged periodically in the original image is the parallax image, if an enlarged image 13 of the object image in the arrangement of $P_1 < w_1$ is flied out, a 3D image having corrected parallax can be observed.

Further, as like as the example of Fig. 5, the respective line images n are aligned with the pitch $P_1$ in the direction $D_1$ in the segmented order. This matter is based on the fact that when the respective line images n (six in Fig. 6) are viewed through the convex lens, the element image which is the aggregate of these line images n is displayed as a segmented image, so that even if the line images are not aligned in the segmented order, the segmented image is displayed laterally inverted manner.

With the case of Fig. 6, reverse to the case of Fig. 5, if the line image (n + 1) is shifted leftward by the distance $w_1$ from the line image n, a correct parallax can be provided when displayed in the 3D manner. This is because the parallax of the 3D image flied out in front of the display surface becomes reverse to the parallax of the 3D image appearing in depth of the display surface in the dented manner. In the case of the animation, the parallax is not reverse, but the operating motion becomes reverse.

Now, then, as the line image (n + 1) is shifted leftward by $w_1$ from the line image n, the line image (n + 1) is aligned at the pitch $P_1$ in the direction $D_1$ in the like manner. Thereafter, the respective line images are aligned in the like manner such that the line images are aligned adjacently in the same order as the segmented order of the segmented images, and the image having the image pitch $w_1$ is deemed as one element image (i.e., partial periodic image). That is, it may be adopted that the line images are aligned in the order of n, (n + 1) from the left side in the direction $D_1$.

More specifically, with reference to Fig. 6, the segmented image which is the aggregation of the nth line image (sixth) is viewed from the front surface C, the (n + 1)th and (n + 2)th segmented images are viewed from the left side angled portions L1 and L2 along the direction $D_{1x}$, and the (n - 1)th and (n - 2)th segmented images are viewed from the right side angled portions R1 and R2 along the direction $D_{1x}$. That is, when the direction of viewer's eyes is moved from the left side toward the right side along the direction $D_{1x}$, appearing images vary in accordance with the reverse order of the segmented order of the original image. As discussed above, without damaging the nature of the rising moiré stripe image, and an optional image as the original image to be displayed can be used. For example, in the case where the object image to be displayed in an enlarged manner is a parallax image, an enlarged image of the object image appears in a rise-up (stand-out) manner and also appears as a 3D image varying in the parallax in accordance with the observing positions. In addition, in the case where the object image to be displayed in an enlarged manner is a frame of the animation, the enlarged image of the object image appears in a rise-up manner and also appears as the animation varying in accordance with the observing positions.

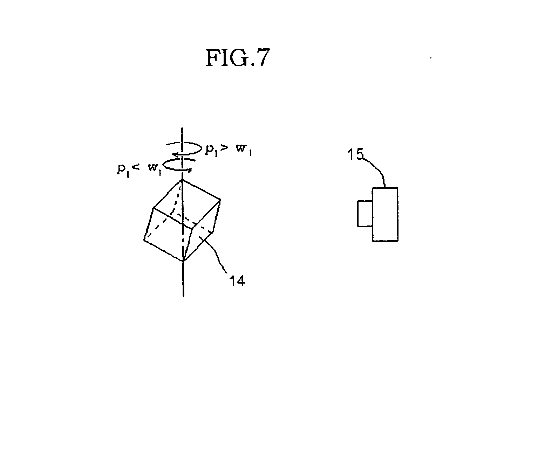

Incidentally, as shown in Fig. 7, as a method of obtaining a segmented image, it may be possible to perform a rendering operation by photographing with a camera 15 or using computer graphics while rotating a three-dimensional object as an object image (object) 14 around a predetermined axis at a predetermined angular pitch. The original image is produced by aligning a plurality of parallax images having such different angles in order in the direction varying the parallax, but may be used as directly segmented images.

In the manner mentioned above, by producing the element image using the plural segmented images different in their angles, it becomes possible to display the 3D (stereoscopic) image having three-dimensional parallax. The term "rendering" means the producing of a two-dimensional image from an object data on a three-dimensional space using the computer graphics.

Herein, although the photographing method using a camera or rendering method is mentioned, a more preferable image may be effectively obtained by arranging a plurality of cameras based on the same principle.

Further, in the cases of $P_1 < w_1$ and $P_1 > w_1$, it is necessary to photograph or perform the rendering operation by reversing the rotating direction of the object 14.

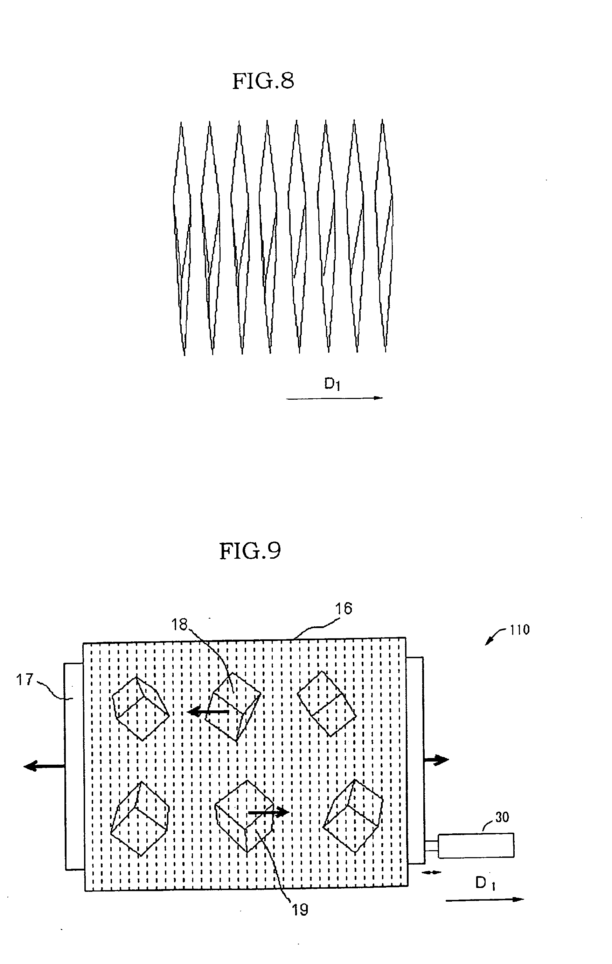

Fig. 8 shows an example of a periodic image obtained by the method shown in Fig. 7. It is to be noted that the lateral (right-and-left direction) in Fig. 8 accords with the direction $D_1$, and each image corresponds to an element image. Since the periodic image shown in Fig. 8 is a continuous image of reduced image (i.e., element image) having no discontinuous boundary line, there is no limitation in viewing area which exists in a usual lenticular lens image, and there is substantially no need for alignment between the lenticular lens and the periodic image, thus being easily handled.

Hereinafter, an image display device 110 according to the third embodiment of the present invention with reference to Fig. 9.

The image display device 110 includes a lenticular lens 16 like that of the first embodiment in which a plurality of convex lenses are aligned in the horizontal direction $D_1$, a display section on which a periodic image 17 is arranged and an actuator 30 as moving means.

The lenticular lens 16 is fixed in a manner separated from the periodic image 17. The periodic image 17, such as a panel or liquid crystal display device, is movable in the direction $D_1$ and is secured to the actuator 30. The actuator 30 is reciprocally movable in the direction $D_1$ and serves to move the periodic image 17 in the direction $D_1$. As the actuator 30, a hydraulic cylinder, a linear motor, a stepping motor or like may be used, for example.

In the first and second embodiments described above, the displayed image is switchable in accordance with the viewing angle (for example, from the angle L2 to R2 with reference to Fig. 4), but in the third embodiment, the relative position of the lenticular lens 16 and the periodic image 17 are variable in the lateral direction along the direction $D_1$, so that it becomes possible to change sequentially the image viewed from the same position (angle). Accordingly, the image display device 110 may be provided with an animation displaying function.

For example, in a case of using a periodic image prepared from a 3D image (stereoscopic image) shown in Fig. 8, if the periodic image 17 is moved leftward to the lenticular lens 16, a displayed image 18 having depth (corresponding to the case of $P_1 > w_1$ in Fig. 4) rotates while being moved leftward, and switched to an image arranged in a position after the movement. On the other hand, the displayed image 19 rising up forward (corresponding to the case of $P_1 < w_1$ in Fig. 6) rotates while being moved rightward, and switched to an image arranged in a position after the movement.

Upon using the 3D image of Fig. 8, a displayed image is a rotated object, but by using an object causing time variation such as operation of the object as a segmented image, the image may be displayed as an animation.

Next, with reference to Fig. 4, a method of forming a periodic image 20 by using an image display device according to the fourth embodiment of the present invention will be explained.

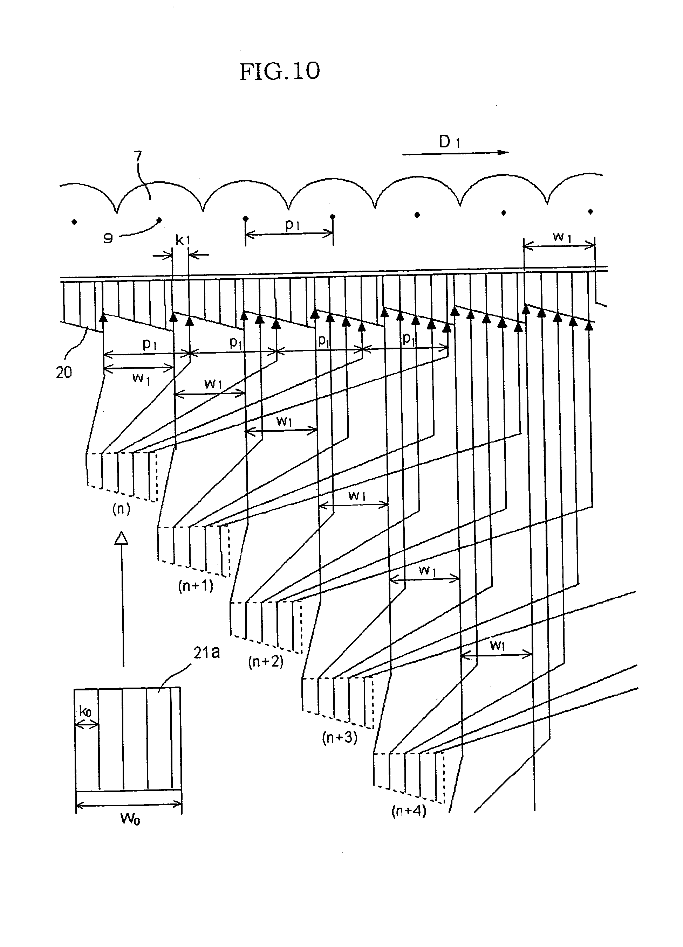

The image display device shown in Fig. 10 has a structure substantially the same structure as that of the first embodiment except that $w_1 \neq w_0$, and the periodic image 20 is different.

Furthermore, in the fourth embodiment, it is supposed that the pitch $P_1 \geq w_1$, $|P_1 - w_1| = k_1$, $P_1 = 5.4$, $w_1 = 4$, $k_1 = 1$. In this case, the $w_1$ is not an integral multiple of $k_1$.

In the fourth embodiment, since $w_1 \neq w_0$, an interval $k_0$ for dividing one segmented image 21a into a plurality of line images differs from the interval $k_1$ of the line images at a time of forming the periodic image 20 with the pitch $w_1$ by arranging the line images.

Then, after the segmenting the segmented image 21a into the line images with the interval ko, the interval of these line images (in this case, $k_1 = k_0 \times (w_x/w_0)$) is reduced to $k_1$ or thinned out. Processes after making the interval of the line images to $k_1$ are substantially the same as those of the first embodiment, the processes are not mentioned herein.

Further, in the case where either one of the $P_1$ and $w_1$ is not the multiple of the element width ($k_1$) such as in the case shown in Fig. 4, even if the line images having the interval $k_1$ (for example, one pixel) is arranged with a width of $P_1$ (for example, 5.4 pixel), a desired arrangement position is not a pixel position, so that it is not arranged as it is. However, because a pixel value of the arrangement position to be desired is obtained from the segmented image, the respective pixels in the $P_1$ maybe determined by an interpolation method using their values. According to this method, since real values as $P_1$ and $w_1$ can be selected, the depth L in the equation (1) or magnification A may be optionally set.

Hereinafter, an image display device 120 according to the fifth embodiment of the present invention will be explained with reference to Fig. 11.

The image display device 120 includes a two-dimensional lens array (aggregate of convex lenses) in which a plurality of convex lenses are arranged in the horizontal (lateral or transverse) and vertical (perpendicular) directions $D_1$ and $D_2$ respectively with the pitch of $P_1$ and $P_2$ and a display section on which a periodic image 23 is displayed. That is, in the fifth embodiment, the periodic image 23 is stereoscopically arranged in an enlarged scale as moiré strips respectively in the horizontal direction $D_1$ and vertical direction $D_2$. Further, in the two-dimensional lens array 22 shown in Fig. 11, $P_1 = P_2 = P$, and the convex lenses are arranged in a square lattice shape, but it may be possible to make $P_1 \neq P_2$ and arrange the convex lenses in a rectangular lattice shape.

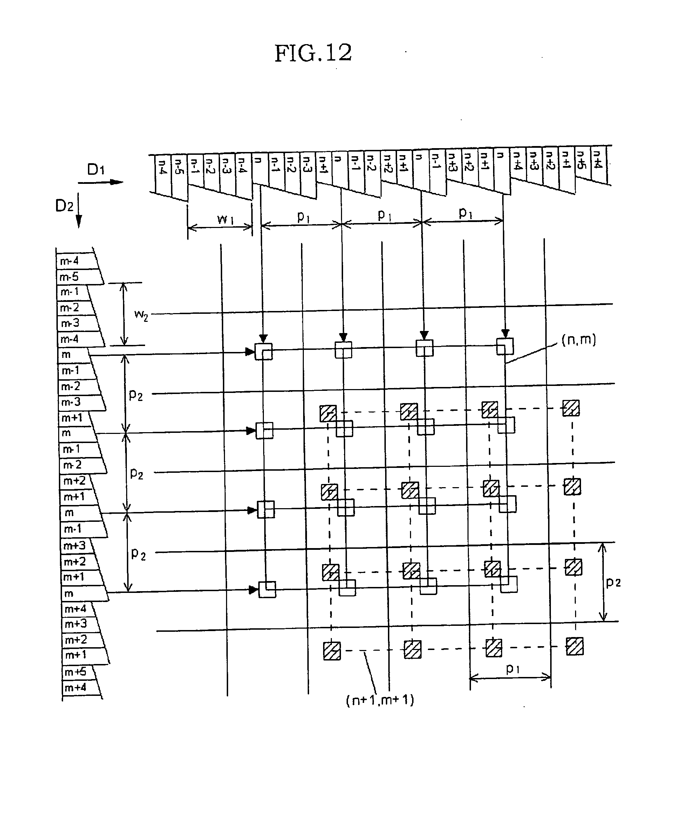

Next, a displayed image by the periodic image 23 will be explained by the periodic image 23 with reference to Fig. 12, in which it is supposed that the pitch $P_1 \geq w_1$, $P_2 > w_2$, $|P_1 - w_1| = k_1$, $|P_2 - w_2| = k_2$, ($k_1$ and $k_2$ are intervals between line images on the periodic image 23), and $w_1$ is an integer multiple of $k_1$ and $w_2$ is an integer multiple of $k_2$. The suffixes 1, 2 to P, w and k represent the directions $D_1$ and $D_2$, respectively.

In the case of the fifth embodiment, the periodic image 23 is composed of a plurality of element images which are arranged in lines and rows in the directions $D_1$ and $D_2$ with horizontal and vertical widths $w_1$. and $w_2$, respectively.

In this embodiment, the original image is segmented horizontally and vertically, as segmented images, and each of the segmented image is further segmented horizontally and vertically as point images. Then, with reference to Fig. 12, on the periodic image, the line images n in the direction $D_1$ and the line images m in the direction D2 cross on crossing points (n, m) as point images. As like as Fig. 4, in this case of Fig. 12, since the images are arranged with lens pitch intervals, the images are arranged in two directions (i.e., vertically and horizontally), the plural point images are arranged into square lattices each having the intervals in the horizontal and vertical directions. Furthermore, the point image (n+1, m+1) in Fig. 12 is also obtained and then arranged in the same manner. By repeating the above point image obtaining and arranging process, a periodic image for the two-dimensional lens array will be obtained.

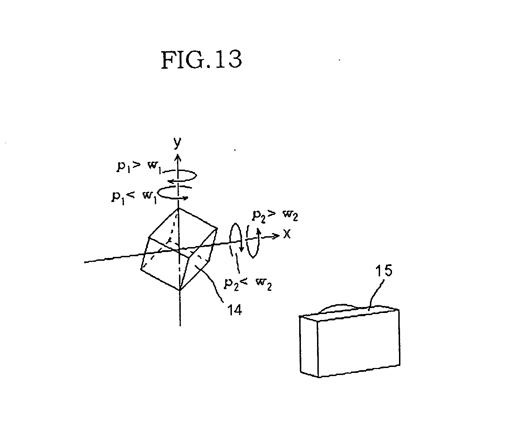

Herein, with reference to Fig. 13, there will be explained a method of photographing a three-dimensional object 14 as an object to be displayed as a method of obtaining a segmented image for preparation of the periodic image 23 that is the two-dimensional image.

First, a rotational angle with the horizontal axis being the center is determined and then "m" is determined, for example, as m = 1. For a series of horizontally arranged segmented images represented with the order "n", the segmented images (1, 1), (1, 2), (1, 3) --- are obtained by sequentially rotating the object 14 around the perpendicular axis "y" being the center, then photographing or rendering the object. This operation is as like as that was explained with reference to Fig. 7 showing the display device using the lenticular lens. Thereafter, the object is rotated around the horizontal axis x, and the order of "m" is determined in the same manner as mentioned above, and sequentially performing the rotating or rendering operation to thereby sequentially obtain the segmented images (2, 1), (2, 2), (2, 3) --, (3, 1), (3, 2), (3, 3) ---. Fig. 12 shows the segmented images obtained by such manner as mentioned above as the segmented point images with the interval P to thereby constitute the periodic image. Accordingly, the image of the object is composed of a stereoscopic image having lateral and vertical three-dimensional parallax.

Hereinabove, although the photographing or rendering method using one camera was explained, an image may be more effectively obtained by arranging a plurality of cameras based on the same principle.

Further, it is the matter of similar that it is necessary to photograph or render the object 14 by inverting the rotating direction thereof according to the cases of $P_1 < w_1$ and $P_1 > w_1$, as like as in the case of Fig. 7.

Furthermore, the embodiment represented by Fig. 12 is one in which the arrangement of Fig. 4 is two-dimensionally widened and the image is seen in depth as p > w. Likely, an image in which the arrangement of Fig. 6 (p < w) that is two-dimensionally widened is seen in front may be also prepared in the similar manner, and it may be possible to utilize a preparation manner having high degree of freedom as shown in Fig. 10.

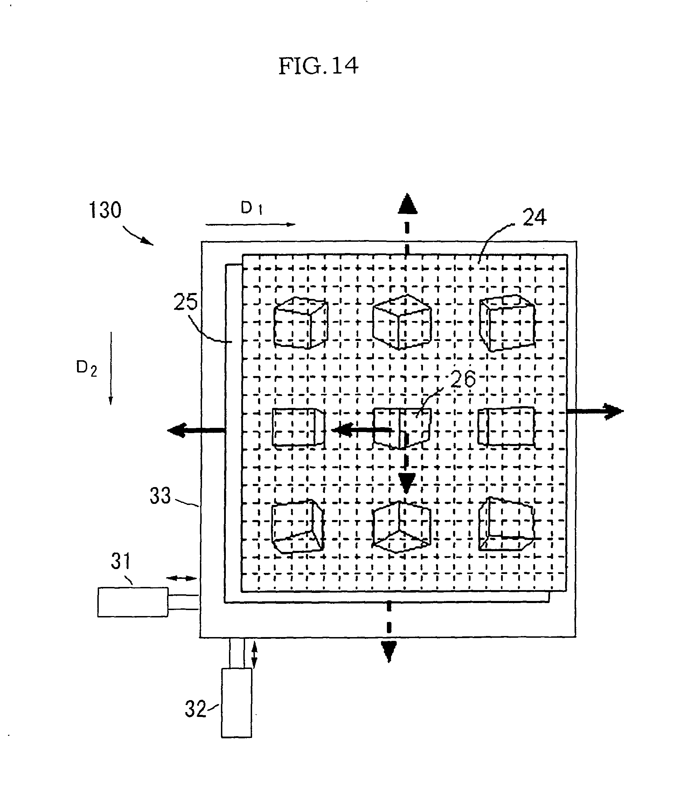

Next, with reference to Fig. 14, an image display device 130 according to the sixth embodiment of the present invention will be explained.

The image display device 130 includes, as like as the fifth embodiment, a two-dimensional lens array 24, a display section on which a periodic image 25 is displayed, and actuators (moving means) 31, 32. The two-dimensional lens array 24 is fixed and separated from the periodic image 25. The periodic image 25 as a panel or a liquid crystal display device is placed on an x-y directional stage 33 to be movable independently in the direction $D_1$ or $D_2$. The x-y stage 33 is mounted to the actuators 31, 32 to be movable in the direction $D_1$ of the actuator 31 and the direction $D_2$ of the actuator 32. Accordingly, the x-y stage 33 and the periodic image 25 are movable in the directions $D_1$ and $D_2$ by the actuators 31 and 32, respectively, which may be constituted by a hydraulic motor, the linear motor, stepping motor and the like.

The sixth embodiment is, as like as in the third embodiment, an image viewed at the same position (i.e., angle) can vary sequentially by changing the relative positions of the two-dimensional lens array 24 and the periodic image 25 along at least one of the directions $D_1$ and $D_2$. According to this manner, it becomes possible for the image display device 130 to be provided with an animation displaying function.

For example, with reference to Fig. 14, when the direction of the periodic image moves in the directions $D_1$ and $D_2$, the displayed image 26 (i.e., the case of $P_1 > w_1$ in Fig. 4) having the depth is rotated while being moved in the same direction as that of the periodic image 25 and then the image is switched to an image arranged to the position after the movement.

In an alternation, it may be possible to use a lens array, as the two-dimensional lens array 28, as shown in Fig. 15, in which the respective convex lenses, each having a hexagonal shape, are disposed in a hexagonal arrangement. In this case, the plural convex lenses are aligned with the pitches $P_1$, $P_2$ and $P_3$, not shown, along the directions $D_1$, $D_2$ and $D_3$. Furthermore, the hexagonal element images forming the periodic image are arranged similarly to the arrangement of the convex lenses of the two-dimensional lens array 28 (i.e., honey-comb shape).

The segment image may be obtained by rendering or photographing by a plurality of cameras arranged in honey-comb shape. Moreover, likely, the segmented image may be obtained by using the same structure as that shown in Fig. 13, by arranging only one camera at the central position on the front surface without using the plural cameras arranged in the honey-comb shape at actual positions, and after coinciding main axes of the objects to be displayed with such positions by rotating around the x-axis and y-axis, and then performing the photographing or rendering operation.

Still furthermore, in the present embodiment, the segmented image is made into a hexagonal shape, from which the point images are extracted in the honey-comb arrangement to thereby form a periodic image composed of the hexagonal element images. In the respective directions $D_1$, $D_2$ and $D_3$, the relationship between the pitch of the element image and the lens pitch may be made to that between the pitch of the element image and the lens pitch in any one of the first to fourth embodiments.

As described above, in one preferred aspect, the image display method of the present invention is performed by using the image display device including an aggregate of convex lenses arranged on the surface thereof with a predetermined lens pitch $P_x$ in at least one direction $D_x$ (in which "x" is a suffix ($_x$) representing the direction), and a display unit displaying a plurality of element images on the focal plane surface of the convex lenses or near the focal plane surface in a manner aligned along the surface to thereby display the element images in the direction $D_x$ with the image pitch $w_x$, the element images being composed of an aggregation of a plurality of parallax component images, thus stereoscopically displaying the moiré stripe, as an image, formed by the shift in pitches between the plural convex lenses and the plural element images.

Furthermore, in another preferred aspect, the image display method of the present invention is performed by using the image display device including an aggregate of convex lenses arranged on the surface thereof with a predetermined lens pitch $P_x$ in at least one direction $D_x$ (in which $_x$ is a suffix representing the direction), and a display unit displaying a plurality of element images on the focal plane surface of the convex lenses or near the focal plane surface in a manner aligned along the surface to thereby display the element images in the direction $D_x$ with the image pitch $w_x$, the element images being composed of an aggregation of a plurality of frame component images, thus displaying the moiré stripe, as an image of animation (moving image), formed by the shift in pitches between the plural convex lenses and the plural element images.

It is to be noted that the image display methods mentioned hereinabove may be executed by using a computer or the methods may be made as program to be executed by a computer, or the program executed by the computer may be stored in a CDROM or like readable by the computer.

It is further to be noted that the present invention is not limited to the described embodiments and many other modifications, alternations and changes may be made without departing from the scopes of the appended claims.

**Claims**

1. An image display device comprising:

   an aggregate of convex lenses arranged on a surface thereof with a predetermined lens pitch $P_x$ in at least one direction $D_x$ (in which $_x$ is a suffix representing the direction); and
   a display unit displaying a plurality of element images on a focal plane surface of the convex lenses or near the focal plane surface in a manner aligned along the surface to thereby display the element images aligned in the direction $D_x$ with an image pitch $w_x$ different from the pitch $P_x$,

   wherein a moiré stripe formed by shift in pitches between a plurality of convex lenses and a plurality of element images is stereoscopically displayed as an image, and the element images are composed of an aggregation of a plurality of parallax component images.

2. An image display device comprising:

   an aggregate of convex lenses arranged on a surface thereof with a predetermined lens pitch $P_x$ in at least one direction $D_x$ (in which x is a suffix representing the direction); and
   a display unit displaying a plurality of element images on a focal plane surface of the convex lenses or near the focal plane surface in a manner aligned along the surface to thereby display the element images aligned in the direction $D_x$ with an image pitch $w_x$ different from the pitch $P_x$,

   wherein a moiré stripe formed by shift in pitches between a plurality of convex lenses and a plurality of element images is displayed as an image of animation, and the element images are composed of an aggregation of a plurality of frame component images.

3. The image display device according to claim 1 or 2, wherein an original image as an object to be displayed is composed of a plurality of segmented images having parallaxes or frames which are different from each other, and the different element images include the segmented images.

4. The image display device according to any one of claims 1 to 3, wherein the aggregation of the element images constitutes a periodic image periodically in at least one direction $D_x$, and the periodic image is formed by the steps of:

segmenting or extracting a plurality of line images or point images with interval $k_{0x}$ from a plurality of segmented images being an original image as an object to be displayed having different parallaxes or frames and having image pitch $w_{0x}$ in at least one direction $D_x$;

reducing or thinning out the interval $k$ of the line images or point images to an interval $k_x$, (wherein $k_x = k_{0x} \times (w_x/w_{0x})$) in a case of $w_x \neq w_{0x}$; and

aligning the line images or point images belonging to a same segmented image in an order of segmentation of the line images or point images with the interval $P_x$, and aligning the element images in the direction $D_x$ with the element image pitch $w_x$ so as to contact adjacently in an order reverse to the segmented order of the line images or point images belonging to adjacent segmented images.

5. The image display device according to claim 4, wherein the interval $k_x = |P_x - w_x|$.

6. The image display device according to any one of claims 1 to 5, further comprising a moving unit for changing relative position between the aggregate of the convex lenses and the element images along the direction $D_x$ to thereby change an image to display in an enlarged manner.

7. The image display device according to any one of claims 3 to 6, wherein the element images are formed by using the segmented images obtained by photographing or rendering a three-dimensional object as the original image while rotating sequentially the three-dimensional object around a predetermined axis with a predetermined angular pitch.

8. An image display method of displaying an image stereoscopically by using an image display device including an aggregate of convex lenses arranged on a surface thereof with a predetermined lens pitch $P_x$ in at least one direction $D_x$ (in which $x$ is a suffix representing the direction); and a display unit displaying a plurality of element images on a focal plane surface of the convex lenses or near the focal plane surface in a manner aligned along the surface to thereby display the element images aligned in the direction $D_x$ with an image pitch $w_x$ different from the pitch $P_x$, wherein the element images are composed of an aggregation of a plurality of parallax component images, and a moiré stripe formed by shift in pitches between a plurality of convex lenses and a plurality of element images is stereoscopically displayed as an image.

9. An image display method of displaying an image as animation by using an image display device including an aggregate of convex lenses arranged on a surface thereof with a predetermined lens pitch $P_x$ in at least one direction $D_x$ (in which $x$ is a suffix representing the direction); and a display unit displaying a plurality of element images on a focal plane surface of the convex lenses or near the focal plane surface in a manner aligned along the surface to thereby display the element images aligned in the direction $D_x$ with an image pitch $w_x$ different from the pitch $P_x$, wherein the element images are composed of an aggregation of a plurality of frame component images, and a moiré stripe formed by shift in pitches between a plurality of convex lenses and a plurality of element images is displayed as an image of animation.

FIG.1A                    FIG.1B

FIG.2

FIG.3

FIG.4

# FIG.5

# FIG.6

## FIG.7

FIG.8

D₁

FIG.9

FIG.10

FIG.11

# FIG.12

FIG.13

FIG.14

FIG.15

FIG.16

FIG.17

23i-1    23i-2    23i-3    23i-4

23

D1

[Equation (1)]

$$L = \frac{p\,d}{p - w} \qquad \text{------------- - (1)}$$

[Equation (2)]

$$A = \frac{p}{p - w} \qquad \text{------------- (2)}$$

[Equation 3]

$$\lambda = \frac{p_1 w_1}{p_1 - w_1} \qquad \text{--------- (3)}$$

**PARTIAL EUROPEAN SEARCH REPORT**

Europäisches Patentamt
European Patent Office
Office européen des brevets

Application Number

under Rule 62a and/or 63 of the European Patent Convention.
This report shall be considered, for the purposes of
subsequent proceedings, as the European search report

EP 11 19 3333

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| E | JP 2012 003163 A (GOTO IKUEIKAI) 5 January 2012 (2012-01-05) * the whole document * | 2-7,9 | INV. G02B27/22 ADD. G02B26/08 |
| A,D | JP 2003 220173 A (TAKASAGO DENKI SANGYO KK; MINO SHOJI KK; INOUE PROCESS KOGEI KK) 5 August 2003 (2003-08-05) * abstract * * figure 3 * | 2,9 | |
| A | JP 10 035083 A (YAMAX KK) 10 February 1998 (1998-02-10) * abstract * * figure 1 * | 2,9 | |

TECHNICAL FIELDS SEARCHED (IPC)

G02B
H04N

## INCOMPLETE SEARCH

The Search Division considers that the present application, or one or more of its claims, does/do not comply with the EPC so that only a partial search (R.62a, 63) has been carried out.

Claims searched completely :

Claims searched incompletely :

Claims not searched :

Reason for the limitation of the search:

see sheet C

| Place of search | Date of completion of the search | Examiner |
|---|---|---|
| Berlin | 5 July 2012 | A. Jacobs |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04E07)

Europäisches
Patentamt

European
Patent Office

Office européen
des brevets

**INCOMPLETE SEARCH
SHEET C**

```
Claim(s) completely searchable:
      2-7, 9

Claim(s) not searched:
      1, 8

Reason for the limitation of the search:

Claims 1 and 8 were not searched, in accordance with Rule 62a(1) EPC.
```

## ANNEX TO THE EUROPEAN SEARCH REPORT
## ON EUROPEAN PATENT APPLICATION NO.

EP 11 19 3333

This annex lists the patent family members relating to the patent documents cited in the above-mentioned European search report.
The members are as contained in the European Patent Office EDP file on
The European Patent Office is in no way liable for these particulars which are merely given for the purpose of information.

05-07-2012

| Patent document cited in search report | | Publication date | Patent family member(s) | | Publication date |
|---|---|---|---|---|---|
| JP 2012003163 | A | 05-01-2012 | NONE | | |
| JP 2003220173 | A | 05-08-2003 | JP | 4907049 B2 | 28-03-2012 |
| | | | JP | 2003220173 A | 05-08-2003 |
| JP 10035083 | A | 10-02-1998 | JP | 3338860 B2 | 28-10-2002 |
| | | | JP | 10035083 A | 10-02-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070097111 A
- JP HEI11189000 B
- JP 2001055000 A
- JP 2001180198 A
- JP 2002046400 A
- JP 2002120500 A
- JP 2003220173 A
- JP 2003226099 A
- JP 2008249809 A